# EUROPEAN PATENT APPLICATION

(11) **EP 4 510 294 A1**
(43) Date of publication of application: **19.02.2025**
(21) Application number: 23890297.7
(22) Date of filing: 09.08.2023
(51) Int. Cl.: H01M 10/42, H01M 4/62, H01M 10/0525, H01M 4/139, H01M 4/13, H01M 4/04

(54) **LITHIUM REPLENISHMENT ELECTRODE SHEET, MANUFACTURING METHOD THEREFOR, BATTERY COMPRISING LITHIUM REPLENISHMENT ELECTRODE SHEET AND ELECTRICAL DEVICE**

(30) Priority: 17.11.2022 CN 202211442548
(71) Applicant: Contemporary Amperex Technology Co., Limited, Ningde, Fujian 352100 (CN)
(72) Inventor: WANG, Donghao, Ningde, Fujian 352100 (CN); JING, Erdong, Ningde, Fujian 352100 (CN); XIE, Haotian, Ningde, Fujian 352100 (CN); ZHANG, Nannan, Ningde, Fujian 352100 (CN); SUN, Xin, Ningde, Fujian 352100 (CN); CHEN, Xiao, Ningde, Fujian 352100 (CN)
(74) Representative: Kraus & Lederer PartGmbB
(86) International application number: PCT/CN2023/112008
(87) International publication number: WO 2024/103858

(57) **Abstract**

A lithium supplement electrode plate and a preparation method thereof, a battery containing the lithium supplement electrode plate, and an electrical device are disclosed. The lithium supplement electrode plate includes a current collector and a coating region disposed on at least one side of the current collector. The coating region includes at least two active layers. The at least two active layers include a pore-forming agent. Two adjacent active layers that include the pore-forming agent are defined as a first active layer and a second active layer respectively, the first active layer is disposed on the current collector, the second active layer is disposed on one side, oriented away from the current collector, of the first active layer. A porosity of the second active layer is greater than a porosity of the first active layer. A high porosity of the second active layer close to the electrolyte solution improves wettability of the second active layer by the electrolyte solution, improves the efficiency of the first active layer contacting the electrolyte solution, and further, improves the capacity exerted by the lithium supplement additive in the first active layer, thereby improving the battery life.

## Description

### CROSS-REFERENCE TO RELATED APPLICATIONS

This application claims priority to Chinese Patent Application No. 202211442548.2, filed on November 17, 2022, which is incorporated herein by reference in its entirety.

### TECHNICAL FIELD

This application relates to technical field of secondary batteries, and in particular, to a lithium supplement electrode plate and a preparation method thereof, a battery containing the lithium supplement electrode plate, and an electrical device.

### BACKGROUND

The positive electrode lithium supplementation is to add a lithium-containing compound of a high irreversible capacity into a positive electrode of a lithium-ion battery. The compound may be classed into binary lithium-containing compounds represented by Li₂O, Li₂O₂, and Li₂S, ternary lithium-containing compounds represented by Li₆CoO₄ and Li₅FeO₄, and organic lithium-containing compounds represented by Li₂DHBN and Li₂C₂O₄.

A positive electrode lithium supplement material may be added directly in a process of mixing a positive electrode slurry. The positive electrode lithium supplementation requires no additional process improvements and is cost-efficient, thereby being more suitable for the current lithium-ion battery manufacturing process, and being hailed as the most promising lithium supplementation technology. Nevertheless, some problems still exist in the lithium supplementation process. For example, it is difficult to exert the capacity of a lithium supplement additive effectively in a process of exerting the capacity of the positive electrode lithium supplement material.

### SUMMARY

A main objective of this application is to provide a lithium supplement electrode plate to improve the capacity exerted by a lithium supplement additive in the lithium supplement electrode plate and improve the battery life.

To achieve the above objective, this application discloses a lithium supplement electrode plate. The lithium supplement electrode plate includes a current collector and a coating region disposed on at least one side of the current collector. The coating region includes at least two active layers. The at least two active layers include a pore-forming agent. Two adjacent active layers that include the pore-forming agent are defined as a first active layer and a second active layer respectively, the first active layer is disposed on the current collector, the second active layer is disposed on one side, oriented away from the current collector, of the first active layer. A porosity of the second active layer is greater than a porosity of the first active layer.

Optionally, a porosity formed by the pore-forming agent in the second active layer is greater than a porosity formed by the pore-forming agent in the first active layer.

In this application, the pore-forming agents form different porosities in different active layers. A high porosity of the second active layer close to the electrolyte solution improves wettability of the second active layer by the electrolyte solution, improves the efficiency of the first active layer contacting the electrolyte solution, and further, improves the capacity exerted by the lithium supplement additive in the first active layer, thereby improving the battery life.

Optionally, the pore-forming agent includes a sacrificial lithium salt.

In this application, a sacrificial lithium salt is used as a pore-forming agent to increase the energy density of the electrode plate, so that other pore-forming agents that do not exert the capacity are prevented from occupying the space of the electrode plate, and are thereby prevented from decreasing the energy density of the electrode plate.

Optionally, a volume change value of the sacrificial lithium salt in the second active layer before reaction versus after reaction is greater than a volume change value of the sacrificial lithium salt in the first active layer before reaction versus after reaction.

A void is generated after the sacrificial lithium salt exerts the capacity or reacts. In order for the porosity of the second active layer to be greater than the porosity of the first active layer, the volume change value of the sacrificial lithium salt in the second active layer before reaction versus after reaction needs to be greater than the volume change value of the sacrificial lithium salt in the first active layer before reaction versus after reaction. Understandably, when the first active layer and the second active layer employ the same type of sacrificial lithium salt, the concentration of the sacrificial lithium salt in the second active layer is greater than the concentration of the sacrificial lithium salt in the first active layer. Still understandably, when the first active layer and the second active layer employ different types of sacrificial lithium salts, the larger the volume change value before reaction versus after reaction of the sacrificial lithium salt, the larger the pores left, and the more suitable the sacrificial lithium salt is for the second active layer. For example, the oxalic acids Li₂C₂O₄, Li₂O, and Li₂O₂ complete reacting directly, and incur the largest volume change value, and are suitable for the second active layer. In contrast, Li₂S is applicable to the first active layer, thereby achieving a porosity difference between the two active layers.

Optionally, when at least one sacrificial lithium salt in the second active layer is of a different type from at least one sacrificial lithium salt in the first active layer, a concentration of the sacrificial lithium salts in the second active layer is greater than or equal to a concentration of the sacrificial lithium salts in the first active layer.

Considering that a variety of sacrificial lithium salts may exist in the active layer, when at least one sacrificial lithium salt in the second active layer is of a different type from at least one sacrificial lithium salt in the first active layer, the concentration of the sacrificial lithium salts in the second active layer is greater than or equal to the concentration of the sacrificial lithium salts in the first active layer. For example, when the volume change values of two different sacrificial lithium salts after reaction are the same, a porosity difference can be formed between the two active layers if the concentration of the sacrificial lithium salt in the second active layer is greater than the concentration of the sacrificial lithium salt in the first active layer. When the volume change values of two different sacrificial lithium salts after reaction are different, if the volume change value of the sacrificial lithium salts after reaction in the second active layer is greater than the volume change value of the sacrificial lithium salts after reaction in the first active layer, a porosity difference can be formed between the two active layers when the concentration of the sacrificial lithium salts in the second active layer is equal to the concentration of the sacrificial lithium salts in the first active layer.

Optionally, when the sacrificial lithium salt in the second active layer is of a same type as the sacrificial lithium salt in the first active layer, a concentration of the sacrificial lithium salt in the second active layer is greater than a concentration of the sacrificial lithium salt in the first active layer.

When the sacrificial lithium salt in the second active layer is of the same type as the sacrificial lithium salt in the first active layer, the volume change value of the sacrificial lithium salt after reaction is the same between the two active layers. In this case, the concentration of the sacrificial lithium salt in the second active layer needs to be greater than the concentration of the sacrificial lithium salt in the first active layer, so as to form a porosity difference between the two active layers.

Optionally, in the at least two active layers, a total concentration of the sacrificial lithium salts is defined as x%, the total concentration of the sacrificial lithium salts = (a mass of all sacrificial lithium salts in all active layers ÷ a sum of mass of all active materials and all sacrificial lithium salts in all active layers) × 100%, and the total concentration x% of the sacrificial lithium salts ranges from 2% to 10%.

The total concentration x% of the sacrificial lithium salt ranges from 2% to 10%, for example, may be 2%, 3%, 4%, 5%, 6%, 7%, 8%, 9%, 10%, or the like, without being particularly limited herein.

Optionally, a single-layer concentration of the sacrificial lithium salt is defined as yi, the single-layer concentration of the sacrificial lithium salts = (a mass of the sacrificial lithium salts in each active layer ÷ a sum of mass of the active materials and the sacrificial lithium salts in each active layer) × 100%, the single-layer concentration of the sacrificial lithium salts in the second active layer is y(i+1), where i ≥ 1, and the single-layer concentration of the sacrificial lithium salts in the first active layer is y(i), satisfying: y(i+1) - y(i) = a, where 1% ≤ a ≤ 4%.

The difference between the single-layer concentration of the sacrificial lithium salts in the second active layer, denoted as y(i+1), and the single-layer concentration of the sacrificial lithium salts in the first active layer, denoted as y(i), is 1% to 4%, where i ≥ 1, indicating that the concentration of the sacrificial lithium salts differs between the two adjacent active layers, thereby forming different porosities. The difference of the concentration of the sacrificial lithium salts between the two adjacent active layers is 1% to 4%, for example, may be 1%, 2%, 2.5%, 3%, 3.5%, 4%, or the like, without being particularly limited herein.

Optionally, when it is defined that the at least two active layers include an active layer A and an active layer B in sequence in a direction from a near point to a distant point relative to the current collector, a single-layer concentration y1 of the sacrificial lithium salts in the active layer A ranges from (x-2)% to (x-0.5)%.

That the at least two active layers include an active layer A and an active layer B in sequence in a direction from a near point to a distant point relative to the current collector means that the active layer A and the active layer B are disposed in sequence in the direction from a near point to a distant point relative to the current collector. In other words, the active layer A is an active layer closest to the current collector and containing a sacrificial lithium salt.

Because the sacrificial lithium salt in the active layer closest to the current collector is not easy to exert the capacity, the single-layer concentration y1 of the sacrificial lithium salt in the active layer A is lower than that of other active layers. The single-layer concentration y1 of the sacrificial lithium salt in the active layer A ranges from (x-2)% to (x-0.5)%, for example, may be (x-2)%, (x-1.5)%, (x-1)%, (x-0.5)%, or the like, without being particularly limited herein. x ranges from 2 to 10, for example, x may be 2, 3, 4, 5, 6, 7, 8, 9, 10, or the like, without being particularly limited herein.

Optionally, the single-layer concentration y1 of the sacrificial lithium salts in the active layer A ranges from 2% to 5%; and/or
the single-layer concentration y2 of the sacrificial lithium salts in the active layer B ranges from 5% to 7%; and/or
when it is defined that the at least two active layers include an active layer A, an active layer B, and an active layer C in sequence in a direction from a near point to a distant point relative to the current collector, a single-layer concentration y3 of the sacrificial lithium salts in the active layer C ranges from 7% to 10%.

When it is defined that the at least two active layers include an active layer A, an active layer B, and an active layer C in sequence in a direction from a near point to a distant point relative to the current collector, the active layer A is closest to the current collector. Therefore, the single-layer concentration y1 of the sacrificial lithium salts in the active layer A is lower than that in other active layers. The single-layer concentration y1 of the sacrificial lithium salts in the active layer A ranges from 2% to 5%, for example, may be 2%, 3%, 4%, 5%, or the like, without being particularly limited herein. The single-layer concentration y2 of the sacrificial lithium salts in the active layer B ranges from 5% to 7%, for example, may be 5%, 6%, 7%, or the like, without being particularly limited herein. The single-layer concentration y3 of the sacrificial lithium salts in the active layer C may be 7%, 8%, 9%, 10%, or the like, without being particularly limited herein. In addition, a concentration difference is formed between different active layers.

Optionally, in the at least two active layers, when a total porosity of the active layers is defined as p, the total porosity of the active layers = (a volume of all pores in all active layers ÷ a sum of volumes of all active layers) × 100%, and the total porosity p of the active layers ranges from 20% to 30%.

The total porosity of the active layer means the volume of all pores in all active layers of the lithium supplement electrode plate divided by the sum of volumes of all active layers in the lithium supplement electrode plate. The total porosity p of the active layers ranges from 20% to 30%, for example, may be 20%, 22%, 25%, 27%, 30%, or the like, without being particularly limited herein. Understandably the porosity is not only related to the concentration of the sacrificial lithium salt, but also related to the compaction density.

Optionally, when the porosity of each active layer is defined as n, the porosity of each active layer = (a volume of pores in each active layer ÷ a volume of each active layer) × 100%; the porosity of the second active layer is n(i+1), where i ≥ 1; and the porosity of the first active layer is n(i), satisfying: n(i+1) - n(i) = b, where 2% ≤ b ≤ 8%.

The porosity of each active layer means the volume of pores in each active layer of the lithium supplement electrode plate divided by the volume of each active layer. The difference between the porosity of the second active layer and the porosity of the first active layer is 2% to 8%, indicating that the porosity of the second active layer is higher than that of the first active layer, thereby facilitating the electrolyte solution to infiltrate the first active layer through the second active layer. For example, the difference between the porosity of the second active layer and the porosity of the first active layer is 2%, 3%, 4%, 5%, 6%, 7%, 8%, or the like, without being particularly limited herein.

Optionally, when it is defined that the at least two active layers include an active layer A and an active layer B in sequence in a direction from a near point to a distant point relative to the current collector, the porosity n1 of the active layer A ranges from 20% to 25%.

The layer active A is closest to the current collector. The porosity of the active layer A is lower than that of other active layers. The porosity of the active layer A is 20% to 25%, for example, may be 20%, 21%, 22%, 23%, 24%, 25%, or the like, without being limited herein.

Optionally, the sacrificial lithium salt includes at least one of Li₂C₂O₄, Li₂M1O₂, Li₂M2O₃, Li₅FeₓM3₍₁₋ₓ₎O₄, or Li₆Mn_{y}M4_{(1-y)}O₄, where M1 includes at least one of Ni, Mn, Cu, Fe, Cr, or Mo; M2 includes at least one of Ni, Mn, Fe, Mo, Zr, Si, Cu, Cr, or Ru; M3 includes at least one of Al, Nb, Co, Mn, Ni, Mo, Ru, or Cr; and M4 includes at least one of Ni, Fe, Cu, or Ru.

The lithium supplement material is not limited herein, and all positive electrode lithium supplement materials currently reported in the literature can be applied to this application, including at least one of Li₂C₂O₄, Li₂M1O₂, Li₂M2O₃, Li₅FeₓM3₍₁₋ₓ₎O₄, or Li₆Mn_{y}M4_{(1-y)}O₄, where M1 includes at least one of Ni, Mn, Cu, Fe, Cr, or Mo; M2 includes at least one of Ni, Mn, Fe, Mo, Zr, Si, Cu, Cr, or Ru; M3 includes at least one of Al, Nb, Co, Mn, Ni, Mo, Ru, or Cr; and M4 includes at least one of Ni, Fe, Cu, or Ru.

Optionally, a general structural formula of a positive electrode material in the at least two active layers is LiMnₓFe_{y}M_{(1-x-y)}PO₄, where 0 ≤ x ≤ 0.8; 0.1 ≤ y ≤ 0.6; 0 ≤1 - x - y ≤ 0.2; and M represents a doping element, and optionally includes at least one of Al, Cu, Mg, Zn, Ni, Ti, V, Zr, Co, Ga, Sn, Sb, Nb, or Ge; and/or
a general structural formula of the positive electrode material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0 ≤ b ≤ 0.35, and 0 ≤1 - a - b ≤ 0.35.

The positive electrode material is not particularly limited herein. For example, the general structural formula of the positive electrode material is LiMnₓFe_{y}M_{(1-x-y)}PO₄, where 0 ≤ x ≤ 0.8; 0.1 ≤ y ≤ 0.6; 0 ≤1 - x - y ≤ 0.2; and M represents a doping element, and optionally includes at least one of Al, Cu, Mg, Zn, Ni, Ti, V, Zr, Co, Ga, Sn, Sb, Nb, or Ge; and/or the general structural formula of the positive electrode material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0 ≤ b ≤ 0.35, and 0 ≤1 - a - b ≤ 0.35.

Optionally, a positive active material is identical in the at least two active layers.

Considering the problem of low energy efficiency in applying different types of positive active materials to different active layers one by one in the positive electrode, this application applies the same positive active material in at least two active layers. The same positive electrode coating forms different porosities to avoid the problem of low energy efficiency.

Optionally, the active layers of the lithium supplement electrode plate further include a conductive agent and a binder. The conductive agent includes at least one of graphite, carbon nanotubes, nanofibers, carbon black, or graphene.

The binder includes at least one of polypropylene, polyethylene, polyvinylidene fluoride, poly(vinylidene fluoride-co-hexafluoropropylene), polytetrafluoroethylene, or polyhexafluoropropylene.

The conductive agent is configured to improve the conductivity of the active layer. The conductive agent is not limited herein. The conductive agent includes at least one of graphite, carbon nanotubes, nanofibers, carbon black, or graphene. For example, the conductive agent may be at least one selected from SP, KS-6, acetylene black, branched Ketjen black ECP, SFG-6, vapor-grown carbon fibers VGCF, carbon nanotubes CNTs, graphene, or a composite conductive agent compounded thereof.

The binder is not limited herein. The binder is a commonly used binder in the art. The binder includes at least one of polypropylene, polyethylene, polyvinylidene fluoride, poly(vinylidene fluoride-co-hexafluoropropylene), polytetrafluoroethylene, or polyhexafluoropropylene.

This application provides a method for preparing a lithium supplement electrode plate, including the following steps: coating a current collector with at least two layers of slurries containing a pore-forming agent, oven-drying the slurries, and cold-pressing the coated current collector to obtain a lithium supplement electrode plate, where the at least two layers of slurries containing a pore-forming agent form at least two active layers; one of the active layers is disposed on the current collector, and another active layer is disposed on one side, oriented away from the current collector, of the one active layer; and a porosity of the other active layer is greater than a porosity of the one active layer.

The porosity of the other active layer is greater than the porosity of the one active layer; a high porosity of the other active layer close to the electrolyte solution improves wettability of the other active layer by the electrolyte solution, improves the efficiency of the one active layer contacting the electrolyte solution, and further, improves the capacity exerted by the lithium supplement additive in the one active layer, thereby improving the battery life.

Optionally, a porosity formed by the pore-forming agent in the other active layer is greater than a porosity formed by the pore-forming agent in the one active layer.

In this application, the pore-forming agents form different porosities in different active layers. A high porosity of the other active layer close to the electrolyte solution improves wettability of the other active layer by the electrolyte solution, improves the efficiency of the one active layer contacting the electrolyte solution, and further, improves the capacity exerted by the lithium supplement additive in the one active layer, thereby improving the battery life.

Optionally, the pore-forming agent includes a sacrificial lithium salt.

In this application, a sacrificial lithium salt is used as a pore-forming agent to increase the energy density of the electrode plate, so that other pore-forming agents that do not exert the capacity are prevented from occupying the space of the electrode plate, and are thereby prevented from decreasing the energy density of the electrode plate.

This application provides a battery, including: a negative electrode plate, a positive electrode plate, a separator, and an electrolyte solution. The positive electrode plate is the lithium supplement electrode plate disclosed above.

The service life of the battery that employs the above lithium supplement electrode plate is improved.

This application provides an electrical device. The electrical device includes the battery disclosed above.

The performance of the electrical device that employs the battery is improved.

The lithium supplement electrode plate disclosed in this application includes a current collector and a coating region disposed on at least one side of the current collector. The coating region includes at least two active layers. The at least two active layers include a pore-forming agent. Two adjacent active layers that include the pore-forming agent are defined as a first active layer and a second active layer respectively, the first active layer is disposed on the current collector, the second active layer is disposed on one side, oriented away from the current collector, of the first active layer. A porosity of the second active layer is greater than a porosity of the first active layer. A high porosity of the second active layer close to the electrolyte solution improves wettability of the second active layer by the electrolyte solution, improves the efficiency of the first active layer contacting the electrolyte solution, and further, improves the capacity exerted by the lithium supplement additive in the first active layer, thereby improving the battery life.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below are merely a part of embodiments of this application. A person of ordinary skill in the art may derive other drawings from the illustrated structure without making any creative effort.
FIG. 1 is a schematic flowchart of a method for preparing a lithium supplement electrode plate according to this application;
FIG. 2 is a schematic structural diagram of a lithium supplement electrode plate according to an embodiment of this application;
FIG. 3 is a schematic structural diagram of a lithium supplement electrode plate according to an embodiment of this application;
FIG. 4 is a schematic diagram of a secondary battery according to an embodiment of this application;
FIG. 5 is an exploded view of the secondary battery shown in FIG. 4 according to an embodiment of this application;
FIG. 6 is a schematic diagram of a battery module according to an embodiment of this application;
FIG. 7 is a schematic diagram of a battery pack according to an embodiment of this application;
FIG. 8 is an exploded view of the battery pack shown in FIG. 7 according to an embodiment of this application; and
FIG. 9 is a schematic diagram of an electrical device that uses a secondary battery as a power supply according to an embodiment of this application.

**List of reference numerals:**

| Reference numeral | Name | Reference numeral | Name |
|---|---|---|---|
| 100 | lithium supplement electrode plate | 3 | lower box |
| 10 | current collector | 4 | battery module |
| 20 | active layer A | 5 | battery cell |
| 30 | active layer B | 51 | housing |
| 40 | active layer C | 52 | electrode assembly |
| 1 | battery pack | 53 | cover plate |
| 2 | upper box | | |

The objective fulfillment, functional characteristics, and advantages of this application will be described in more detail with reference to the drawings.

### DETAILED DESCRIPTION OF EMBODIMENTS

The following clearly and thoroughly describes the technical solutions in some embodiments of this application with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

The following discloses and describes in detail a binder and a preparation method thereof, a separator containing the binder, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Batteries mentioned in this field may be classed into a primary battery and a rechargeable battery depending on rechargeability. Currently, common types of rechargeable batteries include: lead-acid battery, nickel-metal hydride battery, and lithium-ion battery. The lithium-ion battery is widely applied to battery electric vehicles and hybrid vehicles currently. The lithium-ion battery for use in such vehicles possesses a relatively low capacity, but a relatively high output current, a relatively high charge current, and a long lifespan in spite of a relatively high cost.

The battery described in the embodiments of this application means a rechargeable battery. The following describes some embodiments of this application by primarily using a lithium-ion battery as an example. Understandably, the disclosed embodiments of this application are applicable to any other suitable types of rechargeable batteries. A battery mentioned in an embodiment disclosed herein is directly or indirectly applicable to an appropriate device to power the device.

The battery mentioned in an embodiment disclosed herein means a single physical module that includes one or more battery cells to provide a preset voltage and a preset capacity. A battery cell is an elementary unit of the battery. Depending on the form of packaging, battery cells are generally classed into three types: cylindrical cell, prismatic cell, and pouch cell. The following description mainly focuses on a prismatic cell. Understandably, the embodiments described below are applicable to cylindrical cells or pouch cells in some aspects.

A battery cell includes a positive electrode plate, a negative electrode plate, an electrolyte solution, and a separator. A lithium-ion battery cell works primarily by movement of lithium ions between the positive electrode plate and the negative electrode plate. A thin film structure compounded of three layers of materials in a cylindrical cell is wound into a cylinder-shaped electrode assembly. The thin film structure in a prismatic cell is wound or stacked to form an electrode assembly in the approximate shape of a cuboid.

In a typical battery cell structure, a battery cell includes a shell, an electrode assembly, and an electrolyte solution. The electrode assembly is accommodated in the shell of the battery cell. The electrode assembly includes a positive electrode plate, a negative electrode plate, and a separator. The shell includes a housing and an end cap. The shell includes an accommodation cavity formed by a plurality of walls and includes an opening. The end cap is disposed at the opening to seal the accommodation cavity. The accommodation cavity further accommodates an electrolyte solution in addition to the electrode assembly. The positive electrode plate and the negative electrode plate in the electrode assembly each include a tab. To prevent a large electrical current from tripping the circuit, a plurality of positive tabs are stacked together, and a plurality of negative tabs are stacked together. Through a connecting component, the tabs are electrically connected to electrode terminals located outside the battery cell. The electrode terminals generally include a positive electrode terminal and a negative electrode terminal. For a prismatic cell, the electrode terminals are generally disposed at the end cap part. A plurality of battery cells are connected together in series and/or in parallel through electrode terminals, so as to be applied in various scenarios.

**In** high-power application scenarios such as electric vehicles, a battery is applied in different hierarchical forms such as a battery cell, a battery module, and a battery. The battery module is formed by electrically connecting a specific quantity of battery cells together and putting the battery cells into a frame, so as to protect the battery cells from external impact, heat, vibration, and the like. The battery is a final state of a battery system mounted in an electric vehicle. A battery typically includes a box configured to package one or more battery cells. The box generally includes a cover and a box shell.

A plurality of mounting points for connecting to the vehicle body are disposed on the rim of the box or in the middle of the box shell. In order to improve the stability of the connection between the vehicle body and the battery, a mounting portion is usually disposed at the mounting points.

In some battery production and processing technologies, a plurality of battery cells are integrated to form a battery module first, and then the battery module is packaged in the battery box to form a battery pack or battery box.

A typical battery module generally includes two end plates. A plurality of battery cells are arranged between the two end plates. An end plate equipped with an output electrode of the battery module is also referred to as an output electrode end plate. An end plate without the output electrode of the battery module is also referred to as a non-output electrode end plate.

A plurality of battery modules in one row may be packaged in the battery pack, or a plurality of battery modules in a plurality of rows may be packaged in the battery pack. The plurality of battery modules in a plurality of rows may be arranged in double rows and multiple columns, multiple rows and double columns, multiple rows and multiple columns, or the like. Taking a battery pack containing double rows and multiple columns of battery modules as an example, the first end plate of each column is generally a head output electrode plate. The two adjacent end plates between two rows of battery modules are middle non-output electrode end plates. The last end plate of each column is a tail non-output electrode end plate. The head output electrode end plate and one of the middle non-output electrode end plates belong to the first row of battery modules. One of the middle non-output electrode end plates and the tail output electrode end plate belong to the second row of battery modules.

The battery module is packaged into the battery box by means of tooling. A clamping mechanism for clamping the battery module, such as a claw or a suction cup, is usually disposed on the tooling. When a battery module is packaged by using tooling that includes a claw, a claw groove that matches the claw is generally disposed on one side, oriented away from the battery cell, of the end plate, so that the claw can be inserted into the claw groove to clamp and transport the battery module.

The development of the battery technology needs to consider a variety of design factors, including performance parameters such as energy density, cycle life, discharge capacity, charge rate, and discharge rate, and also needs to consider the production cost and processing process of the batteries, so as to improve the quality and production efficiency of the batteries.

In a process of releasing lithium ions, a lithium supplement material needs a specified space and medium to transfer the lithium ions out from the active layer. In theory, the closer the lithium supplement material is to an electrolyte solution, the more favorably the lithium ions are released to compensate for the loss of lithium ions. Similarly, the lithium supplement material close to the current collector is farther away from the electrolyte solution, insufficiently infiltrated by the electrolyte solution, and is of low ion conductivity, thereby being detrimental to the release of lithium ions, and making it difficult to exert the capacity of the lithium supplement material.

For this reason, this application provides a lithium supplement electrode plate. The lithium supplement electrode plate includes a current collector and a coating region disposed on at least one side of the current collector. The coating region includes at least two active layers. The at least two active layers include a pore-forming agent. Two adjacent active layers that include the pore-forming agent are defined as a first active layer and a second active layer respectively, the first active layer is disposed on the current collector, the second active layer is disposed on one side, oriented away from the current collector, of the first active layer. A porosity of the second active layer is greater than a porosity of the first active layer.

The current collector means a structure or component that collects current. In a lithium-ion battery, the current collector mainly means a metal foil such as a copper foil and an aluminum foil. Used as a substrate to which a positive or negative active material is attached, the current collector plays the role in collecting the current generated by the active material and in outputting a large current to the outside. Generally, an aluminum foil is used as a positive current collector, and a copper foil is used as a negative current collector.

The active layer means a layered structure with an active material. The active material means a positive active material on a positive electrode. The positive active material may be a compound that enables reversible intercalation and deintercalation of lithium ions.

A pore-forming agent is an additive that creates a pore structure in the material.

The two adjacent active layers containing the pore-forming agent are a first active layer and a second active layer respectively, which means that the two adjacent active layers containing the pore-forming agent a first active layer and a second active layer respectively. Understandably, the first active layer and the second active layer may be two active layers in contact, and a third active layer containing no pore-forming agent may be disposed between the first active layer and the second active layer. In other words, the active layer containing no pore-forming agent separates the two active layers containing the pore-forming agent.

The first active layer is disposed on the current collector. The second active layer is disposed on one side, oriented away from the current collector, of the first active layer, which means that the first active layer is closer to the current collector than the second active layer. Understandably, the first active layer is directly disposed on the current collector. Also understandably, an active layer containing no lithium supplement additive is disposed between the first active layer and the current collector.

In order to facilitate the electrolyte solution to infiltrate the active layer close to the current collector, the porosity of the second active layer close to the electrolyte solution is made higher than the porosity of the first active layer close to the current collector side, so as to facilitate the electrolyte solution to infiltrate from the second active layer to the first active layer, improve the capacity exerted by the lithium supplement additive distributed in the first active layer, and facilitate the release of lithium ions from the lithium supplement material close to the current collector.

Further, the porosity formed by the pore-forming agent in the second active layer is greater than the porosity formed by the pore-forming agent in the first active layer.

In this application, the pore-forming agents form different porosities in different active layers. A high porosity of the second active layer close to the electrolyte solution improves wettability of the second active layer by the electrolyte solution, improves the efficiency of the first active layer contacting the electrolyte solution, and further, improves the capacity exerted by the lithium supplement additive in the first active layer, thereby improving the battery life.

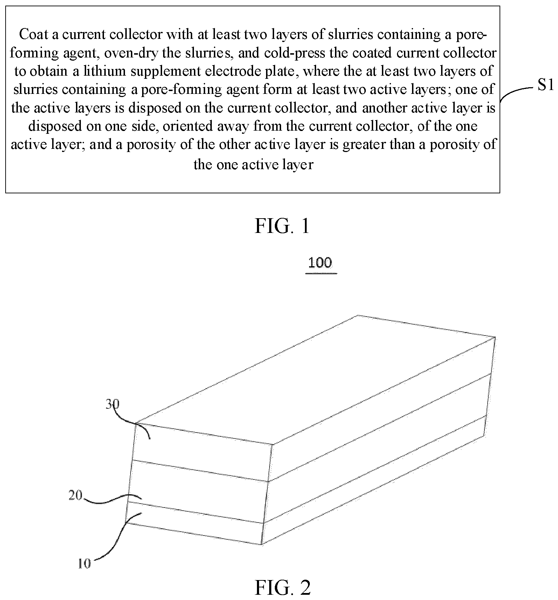

As shown in FIG. 2, which is a structural schematic diagram of a lithium supplement electrode plate according to an embodiment of this application. Two active layers, that is, an active layer A and an active layer B, are disposed on the current collector 10. The active layer A is closer to the current collector. A pore-forming agent is disposed in both the active layer A and the active layer B. The porosity formed by the pore-forming agent in the active layer B is greater than the porosity formed by the pore-forming agent in the active layer A. In this way, the active layer A is more capable of being infiltrated by the electrolyte solution, and it is convenient to release the lithium ions of the lithium supplement material in the active layer A, thereby enabling the lithium supplement additive to effectively exert the capacity and improving the battery life.

Further, the pore-forming agent includes a sacrificial lithium salt.

The sacrificial lithium salt, also known as lithium supplement material, means a pore-forming agent that can provide lithium ions. In other words, after the sacrificial lithium salt exerts the capacity, a void is left. Understandably, after the lithium supplement material exerts the capacity, the material significantly declines in density (for example, Li₂S becomes S), or is completely transformed through reaction (for example, lithium oxalate is transformed to CO₂), unlike the positive active material that repeatedly expands and shrinks during cycling to leave permanent voids in the electrode plate.

In this application, a sacrificial lithium salt is used as a pore-forming agent to increase the energy density of the electrode plate, so that other pore-forming agents that do not exert the capacity are prevented from occupying the space of the electrode plate, and are thereby prevented from decreasing the energy density of the electrode plate.

Further, the volume change value of the sacrificial lithium salt in the second active layer before reaction versus after reaction is greater than the volume change value of the sacrificial lithium salt in the first active layer before reaction versus after reaction.

A void is generated after the sacrificial lithium salt exerts the capacity or reacts. In order for the porosity of the second active layer to be greater than the porosity of the first active layer, the volume change value of the sacrificial lithium salt in the second active layer before reaction versus after reaction needs to be greater than the volume change value of the sacrificial lithium salt in the first active layer before reaction versus after reaction. Understandably, when the first active layer and the second active layer employ the same type of sacrificial lithium salt, the concentration of the sacrificial lithium salt in the second active layer is greater than the concentration of the sacrificial lithium salt in the first active layer. Still understandably, when the first active layer and the second active layer employ different types of sacrificial lithium salts, the larger the volume change value before reaction versus after reaction of the sacrificial lithium salt, the larger the pores left, and the more suitable the sacrificial lithium salt is for the second active layer. For example, the oxalic acids Li₂C₂O₄, Li₂O, and Li₂O₂ complete reacting directly, and incur the largest volume change value, and are suitable for the second active layer. In contrast, Li₂S is applicable to the first active layer, thereby achieving a porosity difference between the two active layers.

Further, when at least one sacrificial lithium salt in the second active layer is of a different type from at least one sacrificial lithium salt in the first active layer, a concentration of the sacrificial lithium salts in the second active layer is greater than or equal to a concentration of the sacrificial lithium salts in the first active layer.

Considering that a variety of sacrificial lithium salts may exist in the active layer, when at least one sacrificial lithium salt in the second active layer is of a different type from at least one sacrificial lithium salt in the first active layer, the concentration of the sacrificial lithium salts in the second active layer is greater than or equal to the concentration of the sacrificial lithium salts in the first active layer. For example, when the volume change values of two different sacrificial lithium salts after reaction are the same, a porosity difference can be formed between the two active layers if the concentration of the sacrificial lithium salt in the second active layer is greater than the concentration of the sacrificial lithium salt in the first active layer. When the volume change values of two different sacrificial lithium salts after reaction are different, if the volume change value of the sacrificial lithium salts after reaction in the second active layer is greater than the volume change value of the sacrificial lithium salts after reaction in the first active layer, a porosity difference can be formed between the two active layers when the concentration of the sacrificial lithium salts in the second active layer is equal to the concentration of the sacrificial lithium salts in the first active layer.

Further, when the sacrificial lithium salt in the second active layer is of a same type as the sacrificial lithium salt in the first active layer, a concentration of the sacrificial lithium salt in the second active layer is greater than a concentration of the sacrificial lithium salt in the first active layer.

When the sacrificial lithium salt in the second active layer is of the same type as the sacrificial lithium salt in the first active layer, the volume change value of the sacrificial lithium salt after reaction is the same between the two active layers. In this case, the concentration of the sacrificial lithium salt in the second active layer needs to be greater than the concentration of the sacrificial lithium salt in the first active layer, so as to form a porosity difference between the two active layers.

Further, in the at least two active layers, a total concentration of the sacrificial lithium salts is defined as x%, the total concentration of the sacrificial lithium salts = (a mass of all sacrificial lithium salts in all active layers ÷ a sum of mass of all active materials and all sacrificial lithium salts in all active layers) × 100%, and the total concentration x% of the sacrificial lithium salts ranges from 2% to 10%.

The mass of all sacrificial lithium salts in all active layers means the sum of mass of the sacrificial lithium salts in all active layers in the lithium supplement electrode plate. For example, the lithium supplement electrode plate includes two active layers: active layer A (98 g of active material, 2 g of sacrificial lithium salt) and active layer B (96 g of active material, 4 g of sacrificial lithium salt). Therefore, the mass of all sacrificial lithium salts in all active layers is 2 g + 4 g = 6 g.

The sum of mass of all active materials and all sacrificial lithium salts in all active layers means the sum of mass of the active materials and sacrificial lithium salts in all active layers in the lithium supplement electrode plate. In the above example, there are active layer A (active material 98 g, sacrificial lithium salt 2 g) and active layer B (active material 96 g, sacrificial lithium salt 4 g). Therefore, the sum of mass of all active materials and all sacrificial lithium salts in all active layers is 98 g + 2 g + 96 g + 4 g = 200 g.

The total concentration of the sacrificial lithium salts means the total concentration of the sacrificial lithium salts in the lithium supplement electrode plate. In the above example, there are active layer A (98 g of active material, 2 g of sacrificial lithium salt) and active layer B (96 g of active material, 4 g of sacrificial lithium salt). Therefore, the total concentration of the sacrificial lithium salts is (6 g/200 g) × 100% = 3%.

The total concentration x% of the sacrificial lithium salt ranges from 2% to 10%, for example, may be 2%, 3%, 4%, 5%, 6%, 7%, 8%, 9%, 10%, or the like, without being particularly limited herein.

Further, a single-layer concentration of the sacrificial lithium salt is defined as yi, the single-layer concentration of the sacrificial lithium salts = (a mass of the sacrificial lithium salts in each active layer ÷ a sum of mass of the active materials and the sacrificial lithium salts in each active layer) × 100%, the single-layer concentration of the sacrificial lithium salts in the second active layer is y(i+1), where i ≥ 1, and the single-layer concentration of the sacrificial lithium salts in the first active layer is y(i), satisfying: y(i+1) - y(i) = a, where 1% ≤ a ≤ 4%.

The single-layer concentration of the sacrificial lithium salt is the concentration of the sacrificial lithium salts in each active layer of the lithium supplement electrode plate. For example, the lithium supplement electrode plate includes two active layers: active layer A (98 g of active material, 2 g of sacrificial lithium salt) and active layer B (96 g of active material, 4 g of sacrificial lithium salt). Therefore, the single-layer concentration y1 of the sacrificial lithium salts in the active layer A is (2 g/100 g) × 100% = 2%; and the single-layer concentration y2 of the sacrificial lithium salts in the active layer B is (4 g/100 g) × 100% = 4%.

The difference between the single-layer concentration of the sacrificial lithium salts in the second active layer, denoted as y(i+1), and the single-layer concentration of the sacrificial lithium salts in the first active layer, denoted as y(i), is 1% to 4%, where i ≥ 1, indicating that the concentration of the sacrificial lithium salts differs between the two adjacent active layers, thereby forming different porosities. The difference of the concentration of the sacrificial lithium salts between the two adjacent active layers is 2% to 4%, for example, may be 1%, 2%, 2.5%, 3%, 3.5%, 4%, or the like, without being particularly limited herein.

At the same time, the concentration of the sacrificial lithium salt in the second active layer close to the electrolyte solution is greater than the concentration of the sacrificial lithium salt in the first active layer close to the current collector, thereby facilitating the sacrificial lithium salt in the second active layer to exert the capacity. That is because the second active layer is close to the electrolyte solution, infiltrated by the electrolyte solution favorably, and highly ion-conductive, and contains the high-concentration sacrificial lithium salt that can effectively exert the capacity. Moreover, after the sacrificial lithium salt exerts the capacity, the sacrificial lithium salt leaves pores in the active layer. In other words, the porosity of the second active layer close to the electrolyte solution is high, and the porosity of the first active layer close to the current collector is low. The electrolyte solution can effectively infiltrate the first active layer of a low porosity through the second active layer of a high porosity, thereby improving the C-rate performance.

Understandably, due to the high concentration of the lithium supplement material in the second active layer and the low concentration of the lithium supplement material in the first active layer, this structural configuration not only enables the lithium supplement material in the second active layer to exert the capacity, but also changes the distribution of the porosity of the active layers, and improves the infiltration effect for the first active layer, thereby improving the capacity exertion of the lithium supplement material in the first active layer and improving the C-rate performance.

Further, when it is defined that the at least two active layers include an active layer A and an active layer B in sequence in a direction from a near point to a distant point relative to the current collector, a single-layer concentration y1 of the sacrificial lithium salts in the active layer A ranges from (x-2)% to (x-0.5)%.

That the at least two active layers include an active layer A and an active layer B in sequence in a direction from a near point to a distant point relative to the current collector means that the active layer A and the active layer B are disposed in sequence in the direction from a near point to a distant point relative to the current collector. In other words, the active layer A is an active layer closest to the current collector and containing a sacrificial lithium salt.

Because the sacrificial lithium salt in the active layer closest to the current collector is not easy to exert the capacity, the single-layer concentration y1 of the sacrificial lithium salt in the active layer A is lower than that of other active layers. The single-layer concentration y1 of the sacrificial lithium salt in the active layer A ranges from (x-2)% to (x-0.5)%, for example, may be (x-2)%, (x-1.5)%, (x-1)%, (x-0.5)%, or the like, without being particularly limited herein. x ranges from 2 to 10, for example, x may be 2, 3, 4, 5, 6, 7, 8, 9, 10, or the like, without being particularly limited herein.

Further, the single-layer concentration y1 of the sacrificial lithium salts in the active layer A ranges from 2% to 5%; and/or the single-layer concentration y2 of the sacrificial lithium salts in the active layer B ranges from 5% to 7%; and/or when it is defined that the at least two active layers include an active layer A, an active layer B, and an active layer C in sequence in a direction from a near point to a distant point relative to the current collector, a single-layer concentration y3 of the sacrificial lithium salts in the active layer C ranges from 7% to 10%.

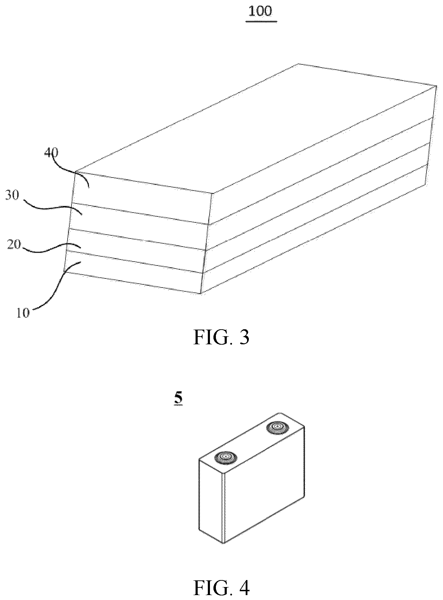

As shown in FIG. 3, when it is defined that the at least two active layers include an active layer A, an active layer B, and an active layer C in sequence in a direction from a near point to a distant point relative to the current collector, the active layer A is closest to the current collector. Therefore, the single-layer concentration y1 of the sacrificial lithium salts in the active layer A is lower than that in other active layers. The single-layer concentration y1 of the sacrificial lithium salts in the active layer A ranges from 2% to 5%, for example, may be 2%, 3%, 4%, 5%, or the like, without being particularly limited herein. The single-layer concentration y2 of the sacrificial lithium salts in the active layer B ranges from 5% to 7%, for example, may be 5%, 6%, 7%, or the like, without being particularly limited herein. The single-layer concentration y3 of the sacrificial lithium salts in the active layer C may be 7%, 8%, 9%, 10%, or the like, without being particularly limited herein. In addition, a concentration difference is formed between different active layers.

Further, in the at least two active layers, when a total porosity of the active layers is defined as p, the total porosity of the active layers = (a volume of all pores in all active layers ÷ a sum of volumes of all active layers) × 100%, and the total porosity p of the active layers ranges from 20% to 30%.

The formula for calculating the porosity is P = [V/V₀] × 100%. V₀ is the volume of the material in a natural state, and V is the volume of all voids in the material.

The total porosity of the active layer means the volume of all pores in all active layers of the lithium supplement electrode plate divided by the sum of volumes of all active layers in the lithium supplement electrode plate. The total porosity of the active layers ranges from 20% to 30%, for example, may be 20%, 22%, 25%, 27%, 30%, or the like, without being particularly limited herein. Understandably the porosity is not only related to the concentration of the sacrificial lithium salt, but also related to the compaction density.

Further, when the porosity of each active layer is defined as n, the porosity of each active layer = (a volume of pores in each active layer ÷ a volume of each active layer) × 100%; the porosity of the second active layer is n(i+1), where i ≥ 1; and the porosity of the first active layer is n(i), satisfying: n(i+1) - n(i) = b, where 2% ≤ b ≤ 8%.

The porosity of each active layer means the volume of pores in each active layer of the lithium supplement electrode plate divided by the volume of each active layer. The difference between the porosity of the second active layer and the porosity of the first active layer is 2% to 8%, indicating that the porosity of the second active layer is higher than that of the first active layer, thereby facilitating the electrolyte solution to infiltrate the first active layer through the second active layer. For example, the difference between the porosity of the second active layer and the porosity of the first active layer is 2%, 3%, 4%, 5%, 6%, 7%, 8%, or the like, without being particularly limited herein.

Further, when it is defined that the at least two active layers include an active layer A and an active layer B in sequence in a direction from a near point to a distant point relative to the current collector, the porosity n1 of the active layer A ranges from 20% to 25%.

The layer active A is closest to the current collector. The porosity of the active layer A is lower than that of other active layers. The porosity of the active layer A is 20% to 25%, for example, may be 20%, 21%, 22%, 23%, 24%, 25%, or the like, without being limited herein.

Further, the sacrificial lithium salt includes at least one of Li₂C₂O₄, Li₂M1O₂, Li₂M2O₃, Li₅FeₓM3₍₁₋ₓ₎O₄, or Li₆Mn_{y}M4_{(1-y)}O₄, where M1 includes at least one of Ni, Mn, Cu, Fe, Cr, or Mo; M2 includes at least one of Ni, Mn, Fe, Mo, Zr, Si, Cu, Cr, or Ru; M3 includes at least one of Al, Nb, Co, Mn, Ni, Mo, Ru, or Cr; and M4 includes at least one of Ni, Fe, Cu, or Ru.

The lithium supplement material is not limited herein, and all positive electrode lithium supplement materials currently reported in the literature can be applied to this application, including at least one of Li₂C₂O₄, Li₂M1O₂, Li₂M2O₃, Li₅FeₓM3₍₁₋ₓ₎O₄, or Li₆Mn_{y}M4_{(1-y)}O₄, where M1 includes at least one of Ni, Mn, Cu, Fe, Cr, or Mo; M2 includes at least one of Ni, Mn, Fe, Mo, Zr, Si, Cu, Cr, or Ru; M3 includes at least one of Al, Nb, Co, Mn, Ni, Mo, Ru, or Cr; and M4 includes at least one of Ni, Fe, Cu, or Ru.

Further, the general structural formula of the positive electrode material in the at least two active layers is LiMnₓFe_{y}M_{(1-x-y)}PO₄, where 0 ≤ x ≤ 0.8; 0.1 ≤ y ≤ 0.6; 0 ≤1 - x - y ≤ 0.2; and M represents a doping element, and optionally includes at least one of Al, Cu, Mg, Zn, Ni, Ti, V, Zr, Co, Ga, Sn, Sb, Nb, or Ge; and/or the general structural formula of the positive electrode material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0 ≤ b ≤ 0.35, and 0 ≤1 - a - b ≤ 0.35.

The positive electrode material is not particularly limited herein. For example, the general structural formula of the positive electrode material is LiMnₓFe_{y}M_{(1-x-y)}PO₄, where 0 ≤ x ≤ 0.8; 0.1 ≤ y ≤ 0.6; 0 ≤1 - x - y ≤ 0.2; and M represents a doping element, and optionally includes at least one of Al, Cu, Mg, Zn, Ni, Ti, V, Zr, Co, Ga, Sn, Sb, Nb, or Ge; and/or the general structural formula of the positive electrode material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0 ≤ b ≤ 0.35, and 0 ≤1 - a - b ≤ 0.35.

Further, a positive active material is identical in the at least two active layers.

Considering the problem of low energy efficiency in applying different types of positive active materials to different active layers one by one in the positive electrode, this application applies the same positive active material in at least two active layers. The same positive electrode coating forms different porosities to avoid the problem of low energy efficiency.

Further, the active layers of the lithium supplement electrode plate further include a conductive agent and a binder. The conductive agent includes at least one of graphite, carbon nanotubes, nanofibers, carbon black, or graphene. The binder includes at least one of polypropylene, polyethylene, polyvinylidene fluoride, poly(vinylidene fluoride-co-hexafluoropropylene), polytetrafluoroethylene, or polyhexafluoropropylene.

The conductive agent is configured to improve the conductivity of the active layer. The conductive agent is not limited herein. The conductive agent includes at least one of graphite, carbon nanotubes, nanofibers, carbon black, or graphene. For example, the conductive agent may be at least one selected from SP, KS-6, acetylene black, branched Ketjen black ECP, SFG-6, vapor-grown carbon fibers VGCF, carbon nanotubes CNTs, graphene, or a composite conductive agent compounded thereof.

The binder is not limited herein. The binder is a commonly used binder in the art. The binder includes at least one of polypropylene, polyethylene, polyvinylidene fluoride, poly(vinylidene fluoride-co-hexafluoropropylene), polytetrafluoroethylene, or polyhexafluoropropylene.

As shown in FIG. 1, this application provides a method for preparing a lithium supplement electrode plate, including the following steps: coating a current collector with at least two layers of slurries containing a pore-forming agent, oven-drying the slurries, and cold-pressing the coated current collector to obtain a lithium supplement electrode plate, where the at least two layers of slurries containing a pore-forming agent form at least two active layers; one of the active layers is disposed on the current collector, and another active layer is disposed on one side, oriented away from the current collector, of the one active layer; and a porosity of the other active layer is greater than a porosity of the one active layer.

The porosity of the other active layer is greater than the porosity of the one active layer; a high porosity of the other active layer close to the electrolyte solution improves wettability of the other active layer by the electrolyte solution, improves the efficiency of the one active layer contacting the electrolyte solution, and further, improves the capacity exerted by the lithium supplement additive in the one active layer, thereby improving the battery life.

Further, a porosity formed by the pore-forming agent in the other active layer is greater than a porosity formed by the pore-forming agent in the one active layer.

In this application, the pore-forming agents form different porosities in different active layers. A high porosity of the other active layer close to the electrolyte solution improves wettability of the other active layer by the electrolyte solution, improves the efficiency of the one active layer contacting the electrolyte solution, and further, improves the capacity exerted by the lithium supplement additive in the one active layer, thereby improving the battery life.

Further, the pore-forming agent includes a sacrificial lithium salt.

In this application, a sacrificial lithium salt is used as a pore-forming agent to increase the energy density of the electrode plate, so that other pore-forming agents that do not exert the capacity are prevented from occupying the space of the electrode plate, and are thereby prevented from decreasing the energy density of the electrode plate.

This application further provides a battery, including: a negative electrode plate, a positive electrode plate, a separator, and an electrolyte solution. The positive electrode plate is the lithium supplement electrode plate disclosed above. The lithium supplement electrode plate employs all technical solutions of all the above embodiments, and therefore, at least achieves all the beneficial effects brought by the technical solutions of the above embodiments, the details of which are omitted here.

The service life of the battery that employs the above lithium supplement electrode plate is improved.

This application further provides an electrical device. The electrical device includes the battery disclosed above. The battery employs all technical solutions of all the above embodiments, and therefore, at least achieves all the beneficial effects brought by the technical solutions of the above embodiments, the details of which are omitted here.

The performance of the electrical device that employs the battery is improved.

Next, a secondary battery, a battery module, a battery pack, and an electrical device according to this application are described below in detail with due reference to drawings.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions. The separator is the separator disclosed herein above.

The positive electrode plate includes a positive current collector and a positive electrode film layer disposed on at least one surface of the positive current collector.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, when the secondary battery is a lithium-ion battery, the positive active material may be a positive active material that is well-known for use in a lithium-ion battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

The charging and discharging process of the battery is accompanied by deintercalation and depletion of lithium. When the battery is discharged to a different state, the molar fraction of lithium is different. In the positive electrode materials enumerated in this application, the molar fraction of lithium is an initial state of the material, that is, a state before the material is fed. When the positive electrode material is applied in a battery system, the molar fraction of lithium changes after charge-discharge cycling.

In the enumeration of the positive electrode materials in this application, the molar fraction of oxygen is merely a theoretical state value. The lattice structure of the material releases oxygen, and leads to a change in the molar fraction of oxygen. The actual molar fraction of oxygen fluctuates.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

A negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

The electrolyte serves to conduct ions between the positive electrode plate and the negative electrode plate. The type of the electrolyte is not particularly limited in this application, and may be selected as required.

In some embodiments, the electrolyte is an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials of different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

The shape of the secondary battery is not particularly limited in this application, and may be cylindrical, prismatic or any other shape. For example, FIG. 4 shows a prismatic battery cell 5 as an example.

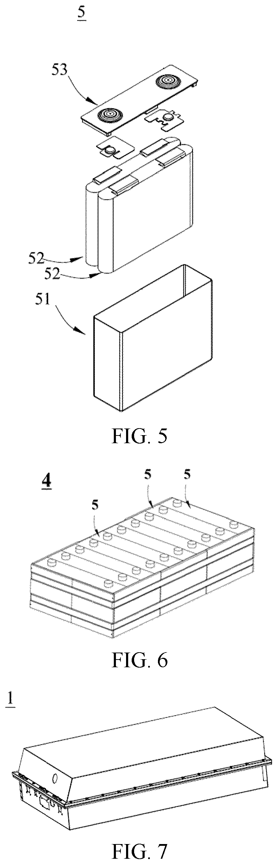

In some embodiments, referring to FIG. 5, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be wound or stacked to form the electrode assembly 52. The electrode assembly 52 is packaged in the accommodation cavity. The electrolyte solution infiltrates in the electrode assembly 52. The number of electrode assemblies 52 included in a battery cell 5 may be one or more, and may be determined by a person skilled in the art as actually required.

In some embodiments, the battery cell may be assembled into a battery module. The battery module may include one or more battery cells, and the specific number of battery cells in a battery module may be selected by a person skilled in the art depending on the application scenario and capacity of the battery module.

FIG. 6 shows a battery module 4 as an example. Referring to FIG. 6, in the battery module 4, a plurality of battery cells 5 may be arranged sequentially along a length direction of the battery module 4. Alternatively, the secondary batteries may be arranged in any other manner. Further, the plurality of battery cells 5 may be fixed by a fastener.

Optionally, the battery module 4 may further include a shell that provides an accommodation space. The plurality of battery cells 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

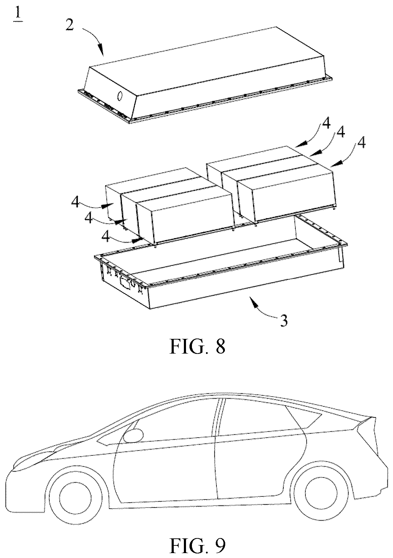

FIG. 7 and FIG. 8 show a battery pack 1 as an example. Referring to FIG. 7 and FIG. 8, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 9 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

### Preparing a lithium supplement electrode plate

Mixing a positive active material, a lithium supplement material, a conductive agent (CNT), and a binder (PVDF) evenly at different mass ratios, and then adding NMP as a solvent. Stirring the mixture by use of a vacuum mixer until the system is homogeneous, so as to obtain a positive active slurry. Applying different positive active slurries evenly onto a substrate in sequence, oven-drying the slurry, and cold-pressing the plate to obtain a positive electrode plate. Stacking the positive electrode plate, the separator, and the negative electrode plate sequentially, placing the separator between the positive electrode and the negative electrode to serve a function of separation, and winding the stacked structure to obtain a bare cell. Putting the bare cell into an outer package, injecting an electrolyte solution, and sealing the package to obtain a battery cell.

### Preparing a negative electrode plate

Mixing artificial graphite as an active material, acetylene black as a conductive agent, styrene-butadiene rubber (SBR) as a binder, and sodium carboxymethyl cellulose (CMC) as a thickener at a specified mass ratio (such as 96.5: 0.7: 1.8: 1) in a deionized water solvent system, stirring well to form a negative active slurry. Applying the negative active slurry onto a current collector (such as copper foil), oven-drying the slurry, and cold-pressing the plate to obtain a negative electrode plate.

### Embodiment 1

The lithium supplement electrode plate includes two active layers.

The constituents of the active layer A are: 97% (98% LFP + 2% Li₂C₂O₄) + 0.8% CNT + 2.2% PVDF.

The constituents of the active layer B are: 97% (93% LFP + 7% Li₂C₂O₄) + 0.8% CNT + 2.2% PVDF.

In the lithium supplement electrode plate, the mass of LFP is m, the mass of Li₂C₂O₄ is n, the total concentration of the sacrificial lithium salts is x% = n/(m + n) × 100% = 4.5%, the single-layer concentration of the sacrificial lithium salts in the active layer A is 2%, and the single-layer concentration of the sacrificial lithium salts in the active layer B is 7%.

### Embodiment 2

The lithium supplement electrode plate includes three active layers.

The constituents of the active layer A are: 97% (98% LFP + 2% Li₂C₂O₄) + 0.8% CNT + 2.2% PVDF.

The constituents of the active layer B are: 97% (93% LFP + +5% Li₂C₂O₄) + 0.8% CNT + 2.2% PVDF.

The constituents of the active layer C are: 97% (93% LFP + 7% Li₂C₂O₄) + 0.8% CNT + 2.2% PVDF.

In the lithium supplement electrode plate, the mass of LFP is m, the mass of Li₂C₂O₄ is n, the total concentration of the sacrificial lithium salts is x% = n/(m + n) × 100% = 4.7%, the single-layer concentration of the sacrificial lithium salts in the active layer A is 2%, the single-layer concentration of the sacrificial lithium salts in the active layer B is 5%, and the single-layer concentration of the sacrificial lithium salts in the active layer C is 7%.

### Embodiment 3

The lithium supplement electrode plate includes three active layers.

The constituents of the active layer A are: 97% (98% LFP + 2% Li₂C₂O₄) + 0.8% CNT + 2.2% PVDF.

The constituents of the active layer B are: 97% (93% LFP + +6% Li₂C₂O₄) + 0.8% CNT + 2.2% PVDF.

The constituents of the active layer C are: 97% (93% LFP + 7% Li₂C₂O₄) + 0.8% CNT + 2.2% PVDF.

In the lithium supplement electrode plate, the mass of LFP is m, the mass of Li₂C₂O₄ is n, the total concentration of the sacrificial lithium salts is x% = n/(m + n) × 100% = 5%, the single-layer concentration of the sacrificial lithium salts in the active layer A is 2%, the single-layer concentration of the sacrificial lithium salts in the active layer B is 6%, and the single-layer concentration of the sacrificial lithium salts in the active layer C is 7%.

### Embodiment 4

The lithium supplement electrode plate includes two active layers.

The constituents of the active layer A are: 97% (98% LFP + 2% Li₂C₂O₄) + 0.8% CNT + 2.2% PVDF.

The constituents of the active layer B are: 97% (93% LFP + +5% Li₂C₂O₄) + 0.8% CNT + 2.2% PVDF.

In the lithium supplement electrode plate, the mass of LFP is m, the mass of Li₂C₂O₄ is n, the total concentration of the sacrificial lithium salts is x% = n/(m + n) × 100% = 3.5%, the single-layer concentration of the sacrificial lithium salts in the active layer A is 2%, and the single-layer concentration of the sacrificial lithium salts in the active layer B is 5%.

### Embodiment 5

The lithium supplement electrode plate includes two active layers.

The constituents of the active layer A are: 97% (95% LFP + 5% Li₂S) + 0.8% CNT + 2.2% PVDF.

The constituents of the active layer B are: 97% (95% LFP + 5% Li₂C₂O₄) + 0.8% CNT + 2.2% PVDF.

In the lithium supplement electrode plate, the mass of LFP is m, the mass of Li₂C₂O is n1, the mass of Li₂S is n2, the total concentration of the sacrificial lithium salts is x% = (n1 + n2)/(m + n1 + n2) × 100% = 5%, the single-layer concentration of the sacrificial lithium salts in the active layer A is 5%, and the single-layer concentration of the sacrificial lithium salts in the active layer B is 5%.

### Embodiment 6

The lithium supplement electrode plate includes two active layers.

The constituents of the active layer A are: 97% (99.5% LFP + 0.5% Li₂C₂O₄) + 0.8% CNT + 2.2% PVDF.

The constituents of the active layer B are: 97% (96.5% LFP +3.5% Li₂C₂O₄) + 0.8% CNT + 2.2% PVDF.

In the lithium supplement electrode plate, the mass of LFP is m, the mass of Li₂C₂O₄ is n, the total concentration of the sacrificial lithium salts is x% = n/(m + n) × 100% = 2%, the single-layer concentration of the sacrificial lithium salts in the active layer A is 0.5%, and the single-layer concentration of the sacrificial lithium salts in the active layer B is 3.5%.

### Embodiment 7

The lithium supplement electrode plate includes two active layers.

The constituents of the active layer A are: 97% (92% LFP +8% Li₂C₂O₄) + 0.8% CNT + 2.2% PVDF.

The constituents of the active layer B are: 97% (88% LFP +12% Li₂C₂O₄) + 0.8% CNT + 2.2% PVDF.

In the lithium supplement electrode plate, the mass of LFP is m, the mass of Li₂C₂O₄ is n, the total concentration of the sacrificial lithium salts is x% = n/(m + n) × 100% = 10%, the single-layer concentration of the sacrificial lithium salts in the active layer A is 8%, and the single-layer concentration of the sacrificial lithium salts in the active layer B is 12%.

### Comparative Embodiment 1

The lithium supplement electrode plate includes one active layer.

The constituents of the active layer A are: 97% (95% LFP + 5% Li₂C₂O₄) + 0.8% CNT + 2.2% PVDF.

In the lithium supplement electrode plate, the mass of LFP is m, the mass of Li₂C₂O₄ is n, and the total concentration of the sacrificial lithium salts is x% = n/(m + n) × 100% = 5%.

### Comparative Embodiment 2

The lithium supplement electrode plate includes no lithium supplement additive.

The constituents of the active layer A are: 97% LFP + 0.8% CNT + 2.2% PVDF.

### Comparative Embodiment 3

The lithium supplement electrode plate includes one active layer.

The constituents of the active layer A are:
97% (95% LFP + 3% Li₂C₂O₄ + 2% Li₂S) + 0.8% CNT + 2.2% PVDF.

In the lithium supplement electrode plate, the mass of LFP is m, the mass of Li₂C₂O₄ is n1, the mass of Li₂S is n2, and the total concentration of the sacrificial lithium salts is x% = (n1 + n2)/(m + n1 + n2) × 100% = 5%.

**Table 1 List of parameters in different embodiments**

| Serial number | Total thickness of active coating (µm) | Active layer A | | | | | |
|---|---|---|---|---|---|---|---|
| | | Lithium supplement additive | | Positive electrode material | | Porosity (%) | Thickness (µm) |
| | | Material | Concentration (%) | Material | Concentration (%) | | |
| Comparative Embodiment 1 | 100 | Li₂C₂O₄ | 5 | LFP | 95 | 35 | 100 |
| Comparative Embodiment 2 | 98 | / | / | LFP | 100 | 25 | 98 |
| Comparative Embodiment 3 | 100 | Li₂C₂O₄, Li₂S | 3Li₂C₂O₄, 2Li₂S | LFP | 95 | 33 | 100 |
| Embodiment 1 | 100 | Li₂C₂O₄ | 2 | LFP | 98 | 30 | 50 |
| Embodiment 2 | 100 | Li₂C₂O₄ | 2 | LFP | 98 | 30 | 30 |
| Embodiment 3 | 100 | Li₂C₂O₄ | 2 | LFP | 98 | 30 | 35 |
| Embodiment 4 | 100 | Li₂C₂O₄ | 2 | LFP | 98 | 30 | 50 |
| Embodiment 5 | 100 | Li₂S | 5 | LFP | 95 | 35 | 50 |
| Embodiment 6 | 100 | Li₂C₂O₄ | 0.5 | LFP | 99.5 | 27 | 50 |
| Embodiment 7 | 100 | Li₂C₂O₄ | 8 | LFP | 92 | 42 | 50 |

**Table 2 List of parameters in different embodiments**

| Serial number | Total thickness of active coating (µm) | Active layer B | | | | | |
|---|---|---|---|---|---|---|---|
| | | Lithium supplement additive | | Positive electrode material | | Porosity (%) | Thickness (µm) |
| | | Material | Concentration (%) | Material | Concentration (%) | | |
| Comparative Embodiment 1 | 100 | / | / | / | / | / | / |
| Comparative Embodiment 2 | 98 | / | / | / | / | / | / |
| Comparative Embodiment 3 | 100 | / | / | / | / | / | / |
| Embodiment 1 | 100 | Li₂C₂O₄ | 7 | LFP | 93 | 40 | 50 |
| Embodiment 2 | 100 | Li₂C₂O₄ | 5 | LFP | 95 | 35 | 40 |
| Embodiment 3 | 100 | Li₂C₂O₄ | 6 | LFP | 94 | 37 | 35 |
| Embodiment 4 | 100 | Li₂C₂O₄ | 5 | LFP | 93 | 35 | 50 |
| Embodiment 5 | 100 | Li₂C₂O₄ | 5 | LFP | 95 | 32 | 50 |
| Embodiment 6 | 100 | Li₂C₂O₄ | 3.5 | LFP | 96.5 | 32 | 50 |
| Embodiment 7 | 100 | Li₂C₂O₄ | 12 | LFP | 88 | 48 | 50 |

**Table 3 List of parameters in different embodiments**

| Serial number | Active layer C | | | | | |
|---|---|---|---|---|---|---|
| | Lithium supplement additive | | Positive electrode material | | Porosity (%) | Thickness (µm) |
| | Material | Concentration (%) | Material | Concentration (%) | | |
| Comparative Embodiment 1 | / | / | / | / | / | / |
| Comparative Embodiment 2 | / | / | / | / | / | / |
| Comparative Embodiment 3 | / | / | / | / | / | / |
| Embodiment 1 | / | / | / | / | / | / |
| Embodiment 2 | Li₂C₂O₄ | 7 | LFP | 93 | 40 | 30 |
| Embodiment 3 | Li₂C₂O₄ | 7 | LFP | 93 | 40 | 30 |
| Embodiment 4 | / | / | / | / | / | / |
| Embodiment 5 | / | / | / | / | / | / |
| Embodiment 6 | / | / | / | / | / | / |
| Embodiment 7 | / | / | / | / | / | / |

### Performance Test

### 1. Testing the C-rate performance

Discharging a battery at 25 °C at a current of xC until the discharge capacity at a cut-off voltage reaches Cₓ. Using C_{0.33} as a reference, and comparing C₂ to C_{0.33} to determine the improvement rate of the C-rate.

### 2. Testing and evaluating the electrolyte solution infiltration effect

Charging a battery (in a D₀ state) until a specified voltage to allow the lithium supplement material to exert the capacity and, at the same time, leave permanent voids in the electrode plate. Subsequently, discharging the battery until an initial state (D₁). Disassembling a battery in the D₀ state and a battery in the D₁ state separately, and then evaporating the electrolyte solution in the electrode plate until the electrode plate of each battery is dry. Replacing the separator in each battery with a new separator, and then assembling each battery with the new separator to obtain a battery E₀ and a battery E₁ separately. Testing the electrolyte solution infiltration rates V₀ and V₁ of the two batteries E₀ and E₁ respectively, where the voltage state of the batteries is 3.0 V.

Method for testing the electrolyte solution infiltration rate: Putting a sufficient amount (100 g in this experiment) of electrolyte solution into an injection cup connected to an injection hole at the top of a battery cell, removing the injection cup after a period of time T (in this experiment, T = 1 h), weighing the decrement of the electrolyte solution in the injection cup, denoted as **▲m,** and calculating the infiltration rate as v = ▲m/T.

### 3. Testing the cycle performance improvement

(1) Charging a lithium-ion battery at 45 °C and at a constant current of 1/3C until the voltage reaches 3.65 V, and then charging the battery at a constant voltage of 3.65 V until the current drops to 0.05 C. Leaving the battery to stand for 5 minutes, and then discharging the battery at a current of 1/3C until the voltage drops to 2.5 V, and recording the discharge capacity C₀ at this time.
(2) Charging the lithium-ion battery at a constant current of 1.0C until the voltage reaches 3.65 V, leaving the battery to stand for 5 minutes, and then discharging the battery at a 1/3C rate until the voltage drops to 2.5 V, and recording the discharge capacity C₁ at this time.

Repeating the above step (2) for 200 cycles, and recording the discharge capacity C₂₀₀ of the lithium-ion battery at the end of the 200^{th} cycle. Calculating the capacity retention rate as P₂₀₀ = C₂₀₀/C₀ × 100%.

### 4. Testing the improvement of capacity exertion of the lithium supplement material

Comparing the capacity (C@4.5 V) of a battery cell charged at 25 °C until the voltage reaches an upper-limit voltage (4.5 V as shown below) in a first cycle (controlling the mass of the positive active material and the mass of the positive electrode lithium supplement material in the battery cell to be identical between different embodiments; if the mass is not identical between different embodiments, a corresponding gravimetric capacity needs to be calculated). When the capacity of the lithium supplement material is more exerted, the cycle performed is more improved.

**Table 4 Performance parameters of embodiments and comparative embodiments (To be continued)**

| Serial number | Concentration of sacrificial lithium salt in each active layer | | | Total concentration of sacrificial lithium salts (X%) | C-rate performance C₂/C_{0.33} |
|---|---|---|---|---|---|
| | Layer A | Layer B | Layer C | | |
| Embodiment 1 | 2% | 7% | / | 4.5% | 82% |
| Embodiment 2 | 2% | 5% | 7% | 4.7% | 85% |
| Embodiment 3 | 2% | 6% | 7% | 5% | 88% |
| Embodiment 4 | 2% | 5% | / | 3.5% | 84% |
| Embodiment 5 | 5% | 5% | / | 5% | 83% |
| Embodiment 6 | 0.5% | 3.5% | / | 2% | 76% |
| Embodiment 7 | 8% | 12% | / | 10% | 70% |
| Comparative Embodiment 1 | 5% | / | / | 5% | 80% |
| Comparative Embodiment 2 | 0 | / | / | 0% | 75% |
| Comparative Embodiment 3 | 5% | / | / | 5% | 78% |

**Table 4 Performance parameters of embodiments and comparative embodiments (Continued)**

| Serial number | First-time electrolyte solution infiltration rate V₀ (g/h) | Second-time electrolyte solution infiltration rate V₁ (g/h) | Capacity retention rate P₂₀₀ | Capacity (C@4.5 V) exertion performance of lithium supplement material (Ah) |
|---|---|---|---|---|
| Embodiment 1 | 202 | 232 | 91% | 10.5 |
| Embodiment 2 | 200 | 240 | 93% | 11 |
| Embodiment 3 | 201 | 255 | 94% | 11.2 |
| Embodiment 4 | 200 | 210 | 88% | 9.5 |
| Embodiment 5 | 195 | 230 | 94% | 12.6 |
| Embodiment 6 | 199 | 208 | 81% | 8.2 |
| Embodiment 7 | 198 | 260 | 75% | 7.6 |
| Comparative Embodiment 1 | 206 | 220 | 90% | 10 |
| Comparative Embodiment 2 | 200 | 202 | 80% | 8 |
| Comparative Embodiment 3 | 198 | 222 | 92% | 12 |

Table 1 to Table 3 show the parameters of different embodiments and comparative embodiments, and Table 4 shows the performance parameters of different embodiments and comparative embodiments. As can be seen from Table 4, two active layers are disposed in the structures in Embodiment 1, Embodiment 4, Embodiment 5, Embodiment 6, and Embodiment 7. Evidently, with the decrease of the total concentration (X%) of the sacrificial lithium salts, the capacity retention rate decreases and the capacity exertion performance of the lithium supplement material declines. Therefore, on the basis of maintaining a concentration gradient of the sacrificial lithium salts in different layers, the total concentration of the sacrificial lithium salts still needs to be kept within a specified range. Understandably, an insufficient dosage of the lithium supplement additive leads to small improvement in the cycle performance. Therefore, the total concentration x% of the sacrificial lithium salts is not less than 2%. On the other hand, although an overdose of the lithium supplement additive brings more pores and is conducive to infiltration by the electrolyte solution, the electronic conductivity of the electrode plate is deteriorated because the electronic conductivity of the lithium supplement additive is generally low, thereby deteriorating the C-rate performance of the electrode plate, restricting the capacity exertion, and making the cycle performance unimproved or even deteriorated. Therefore, the total concentration x% of the sacrificial lithium salts is controlled not to exceed 10%.

The lithium supplement electrode plate in Comparative Embodiment 3 includes one active layer. In Comparative Embodiment 3 versus Embodiment 5, when the total concentration of the sacrificial lithium salts is the same, the performance of the layered lithium supplement electrode plate is higher than the performance of the single-layer lithium supplement electrode plate. For example, the capacity retention rate and the capacity exertion performance of the lithium supplement material in Embodiment 5 are higher than those in Comparative Embodiment 3.

In Embodiments 2 and 3, the lithium supplement electrode plate includes three active layers. In Embodiment 3 versus Embodiment 5, with a larger number of layers, the electrolyte solution infiltration rate is increased, and the C-rate performance is enhanced.

Described above are merely some exemplary embodiments of this application without hereby limiting the patent scope of this application. Any and all equivalent structural variations made by using the content of the specification and the drawings of this application, and direct or indirect use of the technical solutions hereof in other related technical fields without departing from the conception of this application, still fall within the patent protection scope of this application.

## Claims

1. A lithium supplement electrode plate, wherein the lithium supplement electrode plate comprises a current collector and a coating region disposed on at least one side of the current collector, the coating region comprises at least two active layers, and the at least two active layers comprise a pore-forming agent; and
two adjacent active layers that comprise the pore-forming agent are defined as a first active layer and a second active layer respectively, the first active layer is disposed on the current collector, the second active layer is disposed on one side, oriented away from the current collector, of the first active layer, and a porosity of the second active layer is greater than a porosity of the first active layer.

2. The lithium supplement electrode plate according to claim 1, wherein a porosity formed by the pore-forming agent in the second active layer is greater than a porosity formed by the pore-forming agent in the first active layer.

3. The lithium supplement electrode plate according to claim 1 or 2, wherein the pore-forming agent comprises a sacrificial lithium salt.

4. The lithium supplement electrode plate according to claim 3, wherein a volume change value of the sacrificial lithium salt in the second active layer before reaction versus after reaction is greater than a volume change value of the sacrificial lithium salt in the first active layer before reaction versus after reaction.

5. The lithium supplement electrode plate according to claim 4, wherein, when at least one sacrificial lithium salt in the second active layer is of a different type from at least one sacrificial lithium salt in the first active layer, a concentration of the sacrificial lithium salts in the second active layer is greater than or equal to a concentration of the sacrificial lithium salts in the first active layer.

6. The lithium supplement electrode plate according to claim 4, wherein, when the sacrificial lithium salt in the second active layer is of a same type as the sacrificial lithium salt in the first active layer, a concentration of the sacrificial lithium salt in the second active layer is greater than a concentration of the sacrificial lithium salt in the first active layer.

7. The lithium supplement electrode plate according to any one of claims 3 to 6, wherein, in the at least two active layers, a total concentration of the sacrificial lithium salts is defined as x%, the total concentration of the sacrificial lithium salts = (a mass of all sacrificial lithium salts in all active layers ÷ a sum of mass of all active materials and all sacrificial lithium salts in all active layers) × 100%, and the total concentration x% of the sacrificial lithium salts ranges from 2% to 10%.

8. The lithium supplement electrode plate according to claim 7, wherein a single-layer concentration of the sacrificial lithium salt is defined as yi, the single-layer concentration of the sacrificial lithium salts = (a mass of the sacrificial lithium salts in each active layer ÷ a sum of mass of the active materials and the sacrificial lithium salts in each active layer) × 100%, the single-layer concentration of the sacrificial lithium salts in the second active layer is y(i+1), wherein i ≥ 1, and the single-layer concentration of the sacrificial lithium salts in the first active layer is y(i), satisfying: y(i+1) - y(i) = a, wherein 1% ≤ a ≤ 4%.

9. The lithium supplement electrode plate according to claim 7 or 8, wherein, when it is defined that the at least two active layers comprise an active layer A and an active layer B in sequence in a direction from a near point to a distant point relative to the current collector, a single-layer concentration y1 of the sacrificial lithium salts in the active layer A ranges from (x-2)% to (x-0.5)%.

10. The lithium supplement electrode plate according to claim 9, wherein the single-layer concentration y1 of the sacrificial lithium salts in the active layer A ranges from 2% to 5%; and/or
the single-layer concentration y2 of the sacrificial lithium salts in the active layer B ranges from 5% to 7%; and/or
when it is defined that the at least two active layers comprise an active layer A, an active layer B, and an active layer C in sequence in a direction from a near point to a distant point relative to the current collector, a single-layer concentration y3 of the sacrificial lithium salts in the active layer C ranges from 7% to 10%.

11. The lithium supplement electrode plate according to any one of claims 1 to 10, wherein, in the at least two active layers, when a total porosity of the active layers is defined as p, the total porosity of the active layers = (a volume of all pores in all active layers ÷ a sum of volumes of all active layers) × 100%, and the total porosity p of the active layers ranges from 20% to 30%.

12. The lithium supplement electrode plate according to claim 11, wherein, when the porosity of each active layer is defined as n, the porosity of each active layer = (a volume of pores in each active layer ÷ a volume of each active layer) × 100%; the porosity of the second active layer is n(i+1), wherein i ≥ 1; and the porosity of the first active layer is n(i), satisfying: n(i+1) - n(i) = b, wherein 2% ≤ b ≤ 8%.

13. The lithium supplement electrode plate according to claim 12, wherein, when it is defined that the at least two active layers comprise an active layer A and an active layer B in sequence in a direction from a near point to a distant point relative to the current collector, the porosity n1 of the active layer A ranges from 20% to 25%.

14. The lithium supplement electrode plate according to any one of claims 3 to 13, wherein the sacrificial lithium salt comprises at least one of Li₂C₂O₄, Li₂M1O₂, Li₂M2O₃, Li₅FeₓM3₍₁₋ₓ₎O₄, or Li₆Mn_{y}M4_{(1-y)}O₄, wherein M1 comprises at least one of Ni, Mn, Cu, Fe, Cr, or Mo; M2 comprises at least one of Ni, Mn, Fe, Mo, Zr, Si, Cu, Cr, or Ru; M3 comprises at least one of Al, Nb, Co, Mn, Ni, Mo, Ru, or Cr; and M4 comprises at least one of Ni, Fe, Cu, or Ru.

15. The lithium supplement electrode plate according to any one of claims 1 to 14, wherein a general structural formula of a positive electrode material in the at least two active layers is LiMnₓFe_{y}M_{1-x-y}PO₄, wherein 0 ≤ x ≤ 0.8; 0.1 ≤ y ≤ 0.6; 0 ≤1 - x - y ≤ 0.2; and M represents a doping element, and optionally comprises at least one of Al, Cu, Mg, Zn, Ni, Ti, V, Zr, Co, Ga, Sn, Sb, Nb, or Ge; and/or
a general structural formula of the positive electrode material is LiNiₐCo_{b}N_{(1-a-b)}O₂, wherein N optionally comprises at least one of Mn, Zr, Al, B, Ta, Mo, W, Nb, Sb, or La, 0.35 ≤ a < 1.0, 0 ≤ b ≤ 0.35, and 0 ≤1 - a - b ≤ 0.35.

16. The lithium supplement electrode plate according to any one of claims 1 to 15, wherein a positive active material is identical in the at least two active layers.

17. The lithium supplement electrode plate according to claim 16, wherein the active layers of the lithium supplement electrode plate further comprise a conductive agent and a binder, and the conductive agent comprises at least one of graphite, carbon nanotubes, nanofibers, carbon black, or graphene; and
the binder comprises at least one of polypropylene, polyethylene, polyvinylidene fluoride, poly(vinylidene fluoride-co-hexafluoropropylene), polytetrafluoroethylene, or polyhexafluoropropylene.

18. A method for preparing a lithium supplement electrode plate, comprising the following steps:
coating a current collector with at least two layers of slurries containing a pore-forming agent, oven-drying the slurries, and cold-pressing the coated current collector to obtain a lithium supplement electrode plate, wherein the at least two layers of slurries containing a pore-forming agent form at least two active layers; one of the active layers is disposed on the current collector, and another active layer is disposed on one side, oriented away from the current collector, of the one active layer; and a porosity of the other active layer is greater than a porosity of the one active layer.

19. The method for preparing a lithium supplement electrode plate according to claim 18, wherein a porosity formed by the pore-forming agent in the other active layer is greater than a porosity formed by the pore-forming agent in the one active layer.

20. The method for preparing a lithium supplement electrode plate according to claim 18 or 19, wherein the pore-forming agent comprises a sacrificial lithium salt.

21. A battery, comprising a negative electrode plate, a positive electrode plate, a separator, and an electrolyte solution, wherein the positive electrode plate is the lithium supplement electrode plate according to any one of claims 1 to 17.

22. An electrical device, comprising the battery according to claim 21.
